# EUROPEAN PATENT APPLICATION

(11) **EP 1 312 251 A1**
(43) Date of publication of application: **21.05.2003**
(21) Application number: 02025745.7
(22) Date of filing: 15.11.2002
(51) Int. Cl.: A01D 34/86

(54) **Hydraulic articulated arm device**

(30) Priority: 16.11.2001 IT BO20010693
(71) Applicant: Ferri S.rl., 44030 Tamara (Ferrara) (IT)
(72) Inventor: Ferri, Sandro, 44100 Ferrara (IT)
(74) Representative: Negrini, Elena

(57) **Abstract**

A hydraulic articulated arm device for supporting and moving a tool (5) is provided with a plurality of tubes (20) for feeding said tool (5) and with hydraulic actuators of the device (1). The latter has a first articulated joint mean (2) for the connection to a vehicle and for rotatably supporting, through first pivot means (11), a first arm mean (3), rotatably connected, through second pivot means (6), to a second arm mean (4), for supporting the tool (5).
The device (1) includes:
- a bracket mean (7) of the second arm mean (4) protruding in direction approximately opposed to the tool (5) with respect to the second pivot means (6);
- a couple of first hydraulic actuators (8), each one having an end fixed to the first arm mean (3) and the remaining end fixed to the bracket mean (7);
- at least a second hydraulic actuator (13) fixed to the first articulated joint mean (2) and to the first arm mean (3).

## Description

The present invention relates to articulated arm devices, and refers to a hydraulic articulated arm device suitable to be assembled on an agricultural tractor or other vehicle, in order to support, to move and to feed an agricultural tool, particularly, for the park and garden maintenance.

There are known articulated arm devices provided with a first and a second arm means reciprocally articulated in order to support and to move a tool, coupled at the free end of the second arm mean.

The free end of the first arm mean is fixed to a vehicle by a first articulated joint mean.

The angle between the first and second arms is adjusted by means of a hydraulic actuator, interposed between said arms or between the first one and a prolongation of the second one.

The known devices have high pressure tubes, at least partially made of flexible material, for feeding the tool and the orienting actuators thereof with respect to the second arm mean, which are positioned, at least partially, inside or partially fixed to the outside of the latter.

The main drawback of the known devices consists in that the adjusting actuator of the angle between the first and second arm means is bulky or is subject to very high stresses, causing difficulty and obstacles during the use or failure risks of the actuator or its connections, respectively.

Other drawback consists in that the high pressure tubes, if inside the second arm, are difficult to be inspected and changed, while, if external, they are exposed to damages and are bulky during the work because a loop thereof, forming in proximity of the tool.

Further drawback of the known arms, consists in that they are very heavy and therefore they require a lot of power and vehicles with high weight and dimensions, in order to reduce the rollover risk.

The main object of the present invention is to propose an arm device in which the adjusting actuators means of the angle between first and second arm means have reduced dimensions and have very strong and reliable connections to the arm means.

Other object is to propose a device having high-pressure tubes, easy and fast to be inspected and to be replaced, which are protected and does not impede or obstruct the device operator work.

Further object is to propose a light and resistant to the stresses caused by the vehicle motion and by the agricultural tool.

The characteristics of the invention are underlined in the following with particular reference to the attached drawings, in which:
- figure 1 shows an axonometric view of the device object of the present invention in association with an agricultural tool and in which some parts have been removed for better underlining others;
- figure 2 shows a section view of the figure 1 device, according to plane II;
- figure 3 shows an axonometric view of a second embodiment of the figure device 1.

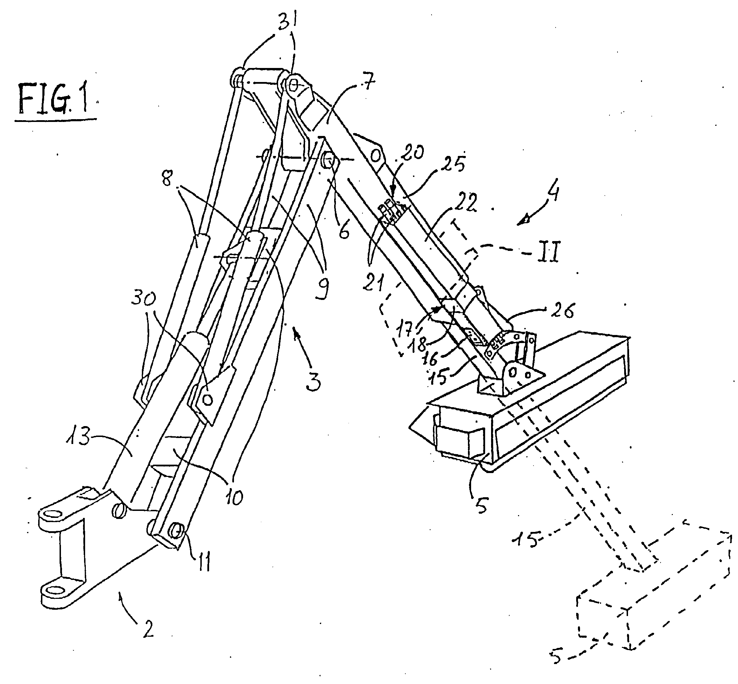

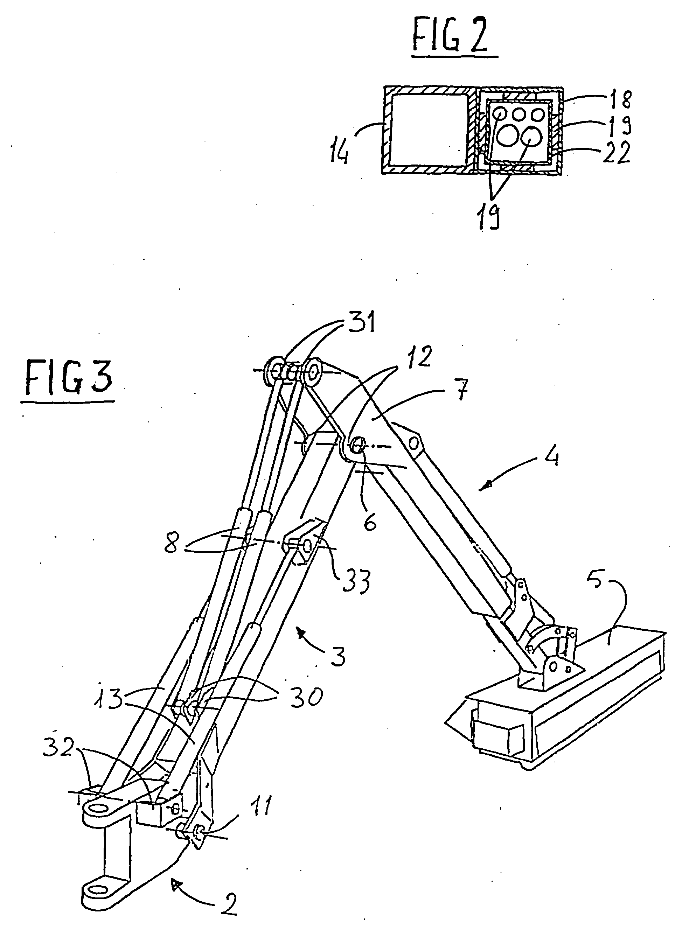

With reference to figures 1 and 2, numeral 1 indicates the hydraulic articulated arm device, object of the present invention, for an agricultural tool 5, consisting for instance of a hydraulically fed head, provided with blades for cutting road edges grass and bushes or hedges and trees.

The device 1 includes a first articulated joint mean 2 connected to a vehicle, such as a tractor, a truck or the like, and revolving around an almost vertical axis.

The first articulated joint mean 2 includes first pivot means 11, consisting of a fulcrum shaft with an almost horizontal axis, fit to rotatably support a first arm mean 3, rotatably connected, through second pivot means 6, consisting of fulcrum shaft with an almost horizontal axis, to a second arm mean 4 for supporting the tool 5.

The device is provided with tubes 20, known and partially shown, carried out by hoses and with at least some portions 21 made of rigid metal. The tubes 20 are in hydraulic flow communication with hydraulic control means, consisting of valves connected to at least a pump and manually operated, with hydraulic actuators of the device 1 and with the tool 5 for the feed and the control thereof.

The device 1 includes a couple of first hydraulic actuators 8, positioned side by side and parallel, each one having an end, fixed to a related connection 30 of the first arm mean 3, and the remaining end, fixed to a related connection 31 of the bracket mean 7, protruding from the second arm mean 4 in direction approximately opposed to the tool 5, with respect to the second pivot means 6.

The first arm mean 3 includes two beam means 9, almost parallel and rectangular section tubular type, and reciprocally fixed by two sheet box-shaped joint means 10.

It is also provided that the two beam means 9 are convergent in the direction of the second pivot means 6 and have equal or different length, in order to form arms having respectively an isosceles trapezoid shape and a right trapezoid shape.

An end of each beam mean 9 is connected to the second pivot means 6 in side position with respect to the bracket mean 7. The portion of each beam mean 9 engaged to the first pivot means 11 of the first articulation joint 2, extends sideways thereto.

The angular position of the first arm mean with respect to the first articulated joint mean 2 is regulated by a second hydraulic actuator 13 interposed between said means.

The second arm mean 4 is of telescopic type and has a first element 14 and a second element 15, which is connected to the tool 5 and slides within the first element 14, because of an extension hydraulic actuator 25 of the second arm 4.

An orientating hydraulic actuator 26 is interconnected between the second element 15 of the second arm 4 and the tool 5, for adjusting the angle between the arm 4 and the tool 5.

The tool 5, the orientating hydraulic actuator 26 and possible further elements or hydraulic components connected to the second element 15, are hydraulically fed through the portions 21, made of rigid metal, of the tubes 20, which are fixed inside a protection mean 22, consisting of a strong "C" channel section, made of high thickness sheet.

The fixing of the portions 21 to the protection mean 22 is carried out by welding but it is also provide that, in alternative, the fixing may consist of rings or removable bridges locked by nuts or bolts positioned in proximity of the ends of the protection mean 22.

An end of the latter is removably locked to the second element 15 of the second arm mean 4 through fixing means 16 consisting of flanges welded to the second element and of screw means.

The first element 14 of the second arm mean 4 has guide means 17 for the protection mean 22 consisting of a hanger element 18 internally provided with sliding means 19 for the protection mean 22 sliding.

The sliding means 19 consist of a plurality of sliding blocks made of synthetic material, for instance Teflon or nylon.

In correspondence of the device 1 operation, the huge forces, required for adjusting the angle between the arms first 3 and second 4, are shared among the two first hydraulic actuators 8 and the related two connections 30 of the first arm 3 and two connections 31 to the bracket mean 7.

Therefore, the stresses exerted on the first hydraulic actuators 8 and on the related connections 30, 31 are reduced to a half with respect to the known devices.

Besides the first two hydraulic actuators 8, being spaced apart, advantageously contribute to increase the rigidity of the device 1.

During the operation of the extension hydraulic actuator 25 of the telescopic second arm 4, the protection mean 22 slides into the guide means 17 and the flexible portions of the tubes 20 form a loop approximately in correspondence of the second pivot means 6, advantageously leaving free and clear the area in proximity of the tool 5.

The two beam means 9 contribute advantageously to increase the rigidity and lightness of the device 1. The convergent conformation of the beam means 9 allows to resist in efficient way the transversal stresses and in particular the trapezoid shape is appropriate to support the high stresses directed in opposite direction with respect to the vehicle motion in correspondence of a orientation of the arms 3, 4 approximately perpendicular to said vehicle.

In the second embodiment of figure 3, the first arm mean 3 has a tubular shape and has the end portion connected to the second pivot means 6, interposed between two flanges 12 of the bracket mean 7.

This variant of the device 1 includes two second hydraulic actuators 13, each one fixed to a respective connection 32 of the first articulated joint mean 2 and to a respective connection 33 of the first arm mean 3.

The connections 33 of the second hydraulic actuators 13 are fixed in the portion of the first arm 3 adjacent to the connection to the second arm 4 and the connections 30 of the two first hydraulic actuators 8 are fixed to the first arm 3 in the portion adjacent to the articulated joint mean 2 and therefore the first 8 and second 13 actuators are crossed with respect to the longitudinal direction of the first arm 3, so advantageously guaranteeing an huge angular stroke of the first and second arm means.

Obviously it is also provided that the first arm 3 of the variant is constituted by two beam means 9 in alternative to the tubular shape.

The operation of the variation does not vary in substantial way from that one previously described.

The main advantage of the present invention is to provide an arm device in which the adjusting actuators of the angle between first and second arm means have small dimensions and very strong and reliable connections to the arm means.

Other advantage of the present invention is to provide a device allowing an easy inspection and substitution of the high-pressure tubes and fit for protecting said tubes fixed in such a way to not impede and obstruct the job.

Further advantage is to provide a safe device, which reduces the rollover risks of the related vehicle and which is light, resistant, economic, simple and with safe and reliable operation.

## Claims

1. Hydraulic articulated arm device for supporting and moving a tool (5), and provided with a plurality of tubes (20) for feeding said tool (5) and with hydraulic actuators of the device (1), including a first articulated joint mean (2) for the connection to a vehicle and for rotatably supporting, through first pivot means (11), a first arm mean (3) rotatably connected, through second pivot means (6), to a second arm mean (4) for supporting the tool (5); said device (1) being **characterized in that** includes:
- a bracket mean (7) of the second arm mean (4) protruding in direction approximately opposed to the tool (5) with respect to the second pivot means (6);
- a couple of first hydraulic actuators (8), each one having an end fixed to the first arm mean (3) and the remaining end fixed to the bracket mean (7);
- at least a second hydraulic actuator (13) fixed to the first articulated joint mean (2) and to the first arm mean (3).

2. Device according to claim 1 **characterized in that** the first arm mean (3) includes two beam means (9) each one having an end connected to the second pivot means (6) sideways to the bracket mean (7).

3. Device according to claim 2 **characterized in that** the two beam means (9) are mutually fixed by at least a joint mean (10).

4. Device according to claim 2 **characterized in that** the two beam means (9) are almost parallel or convergent in direction of the second pivot means (6).

5. Device according to claim 2 **characterized in that** the portion of each beam mean (9) engaged in the first pivot means (11) of the first articulated joint mean (2), extends sideways to the latter.

6. Device according to claim 1 **characterized in that** the first arm mean (3) has tubular shape and the end portion connected to the second pivot means (6), interposed between two flanges (12) of the bracket mean (7).

7. Device according to claim 1 **characterized in that** includes a couple of second hydraulic actuators (13).

8. Device according to claim 1 **characterized in that** the second hydraulic actuator (13) is longitudinally crossed with the first actuator means (8).

9. Device according to claim 1 **characterized in that** the second arm mean (4) is of telescopic type having at least a first element (14) and a second element (15) which is connected to the tool (5).

10. Device according to claim 9 **characterized in that** at least a portion (21) of the tubes (20) fit for feeding at least the tool (5) is fixed to a protection mean (22) locked by fixing means (16) to the second element (15) of the second arm (4).

11. Device according to claim 10 **characterized in that** the first element (14) of the second arm mean (4) has guide means (17) for the protection mean (22).

12. Device according to claim 11 **characterized in that** the guide means (17) consist of a hanger element (18) internally provided with sliding means (19).

13. Device according to claim 12 **characterized in that** the sliding means (19) consist of a plurality of sliding blocks made of synthetic material, the portions (21) and the protection mean (22) are metallic.
